# EUROPÄISCHE PATENTSCHRIFT

(11) **EP 2 924 474 B1**
(45) Veröffentlichungstag und Bekanntmachung des Hinweises auf die Patenterteilung: **28.04.2021**
(21) Anmeldenummer: 15157663.4
(22) Anmeldetag: 04.03.2015
(51) Int. Cl.: G01V 8/12, B82Y 20/00, G01N 21/25

(54) **Optischer Sensor mit einem eine Nanostruktur-basierte Leuchtdiode umfassenden Lichtsender**
Optical sensor with a nanostructure-based light-emitting diode comprised in a light transmitter
Capteur optique avec un émetteur de lumière comprenant une diode nanostructurelle

(30) Priorität: 26.03.2014 DE 102014104240
(43) Veröffentlichungstag der Anmeldung: 30.09.2015
(73) Patentinhaber: SICK AG, 79183 Waldkirch (DE)
(72) Erfinder: Hörsch, Dr. Ingolf, 79102 Freiburg (DE); Hirt, Günter, 77790 Steinach (DE); Bergbach, Roland, 79364 Malterdingen (DE)
(74) Vertreter: Manitz Finsterwald Patent- und Rechtsanwaltspartnerschaft mbB

(56) Entgegenhaltungen:
- EP-A2- 2 042 854
- WO-A1-2012/099564
- DE-U1-202014 101 426
- US-A1- 2011 079 796

## Beschreibung

Die vorliegende Erfindung betrifft einen optischen Sensor zur Erkennung von Objekten oder Objekteigenschaften umfassend einen Lichtsender zum Aussenden von Sendelichtstrahlen in einen Beleuchtungsbereich, einen Lichtempfänger zum Empfangen von Empfangslichtstrahlen und eine Auswerteeinheit, die dazu ausgebildet ist, anhand der von dem Lichtempfänger empfangenen Empfangslichtstrahlen ein in dem Beleuchtungsbereich befindliches oder in diesen hineinragendes Objekt zu erfassen und/oder eine Eigenschaft eines solchen Objekts zu ermitteln.

Derartige Sensoren werden in vielfältiger Weise zum berührungslosen Detektieren von im Sichtbereich des Sensors vorhandenen Objekten eingesetzt. Beispielsweise dienen Lichttaster dazu, den Abstand einer Objektoberfläche von einer Bezugsebene des Sensors zu ermitteln. Mittels Lichtschranken oder Lichtgittern können z. B. in einen abgesicherten Bereich eindringende Personen erkannt werden. Ein weiteres Einsatzgebiet von optischen Sensoren ist die Ermittlung bestimmter Eigenschaften von Objekten, beispielsweise in Form einer Farberkennung oder des Identifizierens von objektseitigen Markierungen oder Kennzeichen.

Üblicherweise umfasst der Lichtsender eines optischen Sensors eine Leuchtdiode oder einen Halbleiterlaser. Die vergleichsweise geringe spektrale Linienbreite derartiger Lichtquellen ist jedoch insofern problematisch, als die Empfindlichkeit des optischen Sensors bei verschiedenfarbigen Objektoberflächen unterschiedlich ausfällt. Zur Behebung dieses Problems können im Prinzip mehrere Leuchtdioden oder Halbleiterlaser mit jeweils unterschiedlichem Emissionsspektrum bereitgestellt werden, deren Sendelichtstrahlen mittels optischer Komponenten wie Strahlteilern oder Wellenleitern zu einem gemeinsamen Sendlichtstrahlenbündel vereinigt werden. Dies ist jedoch nicht nur mit einem hohen Herstellungs- und Montageaufwand und dementsprechenden Kosten verbunden, sondern auch mit einer verringerten Schärfe bei einer nachfolgenden Abbildung. Speziell ist bei einer Fokussierung eines aus mehreren Einzellichtquellen zusammengesetzten Sendelichtstrahlenbündels nur ein vergleichsweise großer Brennfleck mit dementsprechend begrenzter Leistungsdichte erzielbar, was letztlich die Zuverlässigkeit der Objekterkennung beeinträchtigt.

Die US 2011/0079796 A1 offenbart eine Leuchtdiode, bei der eine Leistungsregelung mittels optischer Rückkopplung vorgesehen ist. Auf dem Substrat der Leuchtdiode ist ein Nanodraht sowie ein optischer Sensor vorgesehen. Das Ausgangssignal des optischen Sensors wird von einer elektronischen Steuereinrichtung zur Ansteuerung der Leuchtdiode herangezogen.

In der WO 2012/099564 A1 ist ein Rauchmelder offenbart, der auf dem Prinzip der Luft-Ionisierung beruht. Zum Ionisieren der Luft ist eine Strahlungsquelle vorgesehen, welche ein leitfähiges Substrat mit einer Anordnung von Nanostrukturen umfassen kann. Die Nanostrukturen senden Elektronen oder Röntgenstrahlen aus. Oberhalb der Strahlungsquelle ist eine Lichtkammer vorgesehen, welche mit einem Edelgas gefüllt ist. Durch die Lichtkammer hindurchtretende Elektronen können Licht erzeugen, das von einer Linse gebündelt wird und in die Detektionskammer eintritt. Es findet sowohl eine Messung der Ionisation mittels eines Ionisationssensors als auch eine Messung des gestreuten Lichts mittels eines Lichtsensors statt.

In der EP 2 042 854 A2 ist ein Infrarotsensor offenbart, dessen Sender und Empfänger mit speziellen Polarisatoren auf Basis von nanoskaligen Metallstreifengittern ausgestattet sind.

Es ist eine Aufgabe der Erfindung, einen optischen Sensor bereitzustellen, der eine exaktere und robustere Erkennung von Objekten oder Objekteigenschaften ermöglicht.

Die Lösung der Aufgabe erfolgt durch einen optischen Sensor mit den Merkmalen des Anspruchs 1.

Ein erfindungsgemäßer optischer Sensor kann als optischer Taster, beispielsweise als Wechsellicht-Taster, Triangulationstaster, Lumineszenztaster oder Kontrasttaster ausgebildet sein. Bei einer Ausbildung als Triangulationstaster kann z. B. auch eine Hintergrundausblendung vorgesehen sein. Alternativ kann ein erfindungsgemäßer optischer Sensor als Einweg-Lichtschranke oder als Reflexionslichtschranke ausgebildet sein. Ein erfindungsgemäßer optischer Sensor kann auch als Farbsensor ausgebildet sein.

Erfindungsgemäß umfasst der Lichtsender eine Nanostruktur-basierte Leuchtdiode. Nanostrukturen zeichnen sich dadurch aus, dass sie Strukturdimensionen im Bereich von Nanometern, insbesondere einigen hundert Nanometern, haben. Bei Nanostruktur-basierten Leuchtdioden wie z. B. so genannten "nanowire LEDs" bildet jede Nanostruktur eine Einzel-Leuchtdiode, welche im Prinzip hinsichtlich ihrer Abstrahlungseigenschaften individuell ausgelegt sein kann.

Zur Beeinflussung der Abstrahlungseigenschaften können die Nanostrukturen beispielsweise mit einer ausgewählten individuellen Schichtstruktur epitaktisch gewachsen werden, die für die spektralen Eigenschaften verantwortlich ist. Insbesondere kann der Struktur durch entsprechend ausgewählte Schichtfolgen in an sich bekannter Weise eine Bandstruktur aufgeprägt werden, die ein charakteristisches Abstrahlverhalten festlegt. Alternativ oder zusätzlich können die räumlichen Dimensionen zur Festlegung der optischen Eigenschaften beitragen. Mittels bekannter lithographischer Methoden können somit in einer Anordnung von Nanostrukturen mit hoher räumlicher Auflösung unterschiedlich abstrahlende Bereiche erstellt werden. Ebenso ist es mittels geeigneter Elektrodenanordnungen möglich, unterschiedliche Gruppen von Nanostrukturen und im Prinzip sogar jede einzelne Nanostruktur einer Nanostruktur-basierten Leuchtdiode individuell anzusteuern. Eine Nanostruktur-basierte Leuchtdiode kann somit eine Vielzahl von unterschiedlich abstrahlenden Einzellichtquellen auf einem einzelnen Chip vereinen. Aufgrund des geringen gegenseitigen Abstands der Nanostrukturen - welcher typischerweise einige Hundert Nanometer beträgt - können die unterschiedlich abstrahlenden Bereiche derart gemischt sein, dass sich bei makroskopischer Betrachtung eine einheitlich in einer Mischfarbe leuchtende Fläche ergibt. Ein mit einer Nanostruktur-basierten Leuchtdiode ausgestatteter optischer Sensor ist somit wesentlich flexibler einsetzbar als ein Sensor mit monochromatischer oder quasimonochromatischer Lichtquelle. Weiterhin kann eine homogene Leuchtfläche wesentlich besser abgebildet werden als das Sendelicht separater makroskopischer Einzellichtquellen.

Schließlich ist es auch denkbar, dass die einzelnen Nanostrukturen untereinander gleich sind und so mit der gleichen Wellenlänge abstrahlen, aber gegebenenfalls mit Hilfe entsprechender Elektrodenanordnungen ausgewählt oder in bestimmten Mustern angesteuert werden (entsprechend z. B. einer räumlichen Modulation).

Die Verwendung einer Nanostruktur-basierten Leuchtdiode als Lichtquelle ermöglicht bei optischen Tastern die zuverlässige Erkennung verschiedenfarbiger Objekte sowie die selektive Erkennung bestimmter Objekteigenschaften. Bei einem Triangulationstaster mit Hintergrundausblendung besteht der Vorteil einer in den Lichtsender integrierten Nanostruktur-basierten Leuchtdiode unter anderem darin, dass die Erkennungsleistung bei der Erkennung von flachen Objekten durch ein zusätzliches wellenlängenabhängiges Schaltkriterium erhöht werden kann. Z. B. kann der Sensor schalten, wenn ein flaches farbiges Objekt vor einem schwarzen Hintergrund erkannt wird. Gegenüber einem Farbsensor ermöglicht ein derartiger Triangulationstaster mit Hintergrundausblendung eine Einsparung von Herstellungskosten und einen flexibleren Arbeitsabstand.

Aufgrund der Nanostruktur-basierten Leuchtdiode als Sendelichtquelle kann die Robustheit einer Lichtschranke gegenüber Störeinflüssen verbessert werden, beispielsweise durch Verwendung farblich kodierter Reflektoren und einer wellenlängenabhängigen Auswertung des Reflexionslichts.

Für das Erzeugen mehrfarbiger, insbesondere weißer, Sendelichtstrahlen ist bei Verwendung einer Nanostruktur-basierten Leuchtdiode keine Bereitstellung und optische Zusammenführung mehrerer separater Lichtquellen erforderlich.

Vorzugsweise ist dem Lichtsender eine Steuereinrichtung zugeordnet, welche dazu ausgebildet ist, die Sendelichtstrahlen durch Ansteuerung der Nanostruktur-basierten Leuchtdiode während des Betriebs des optischen Sensors räumlich und/oder spektral zu modulieren. Somit ist auf einfache Weise eine Anpassung der durch den Lichtsender ausgesendeten Sendelichtstrahlen an eine bestimmte Anwendungssituation möglich. Beispielsweise kann die Steuereinrichtung dafür sorgen, dass das Emissionsspektrum des Lichtsenders in Abhängigkeit von einer zu detektierenden Objektfarbe eingestellt wird. Hierbei ist es bei Bedarf auch möglich, das Emissionsspektrum des Lichtsenders einer sich ändernden Objektfarbe kontinuierlich nachzuführen. Eine räumliche Modulation der Sendelichtstrahlen ermöglicht das Erzeugen eines gewünschten Sendelichtmusters.

Die Steuereinrichtung kann dazu ausgebildet sein, zum räumlichen und/oder spektralen Modulieren der Sendelichtstrahlen verschiedene Gruppen von Nanostrukturen der Nanostruktur-basierten Leuchtdiode individuell anzusteuern. Beispielsweise könnte die Steuereinrichtung je nach Anwendung lediglich einen Teil der vorhandenen Nanostrukturen oder alle vorhandenen Nanostrukturen zum Leuchten anregen. Hierfür muss die Steuereinrichtung lediglich die entsprechenden Elektroden aktivieren. Auch eine Anpassung des Elektrodenstroms durch die Steuereinrichtung kann zur Modulation genutzt werden.

Insbesondere kann die Nanostruktur-basierte Leuchtdiode eine durch eine Anordnung von nebeneinander befindlichen Nanostrukturen definierte Leuchtfläche aufweisen, wobei sich die Abstrahlungseigenschaften, insbesondere die spektralen Emissionscharakteristiken, der Nanostrukturen in wenigstens zwei separaten Zonen der Leuchtfläche voneinander unterscheiden. Durch individuelles Ansteuern der separaten Zonen der Leuchtfläche mittels einer Steuereinrichtung ist es möglich, die Gesamt-Emissionscharakteristik der Sendelichtstrahlen des Lichtsenders in einer gewünschten Weise zu beeinflussen. Beispielsweise können sich in einer Zone der Leuchtfläche lediglich rot emittierende Nanostrukturen und in einer anderen Zone der Leuchtfläche lediglich grün emittierende Nanostrukturen befinden. Die Steuereinrichtung kann dann in Abhängigkeit von der jeweiligen Anwendung das Aussenden von rotem, grünem oder - durch Überlagerung - gelbem Licht bewirken.

Eine Ausführungsform der Erfindung sieht vor, dass Zonen der Leuchtfläche, die sich hinsichtlich der Strahlungseigenschaften der Nanostrukturen unterscheiden, ein regelmäßiges oder statistisches, insbesondere mikroskopisches, Muster bilden, welches sich vorzugsweise über die gesamte Leuchtfläche der Nanostruktur-basierten Leuchtdiode erstreckt. Diese Ausgestaltung ermöglicht eine besonders gute Strahlformung. Im Falle eines mikroskopischen Musters liegt bei Betrachtung von außen eine völlig gleichmäßig leuchtende Fläche vor.

Eine weitere Ausführungsform der Erfindung sieht vor, dass Zonen der Leuchtfläche, die sich hinsichtlich der Abstrahlungseigenschaften der Nanostrukturen unterscheiden, ein vorgegebenes makroskopisches Muster bilden. Ein solches makroskopisches Muster kann dazu verwendet werden, ein Objekt entsprechend gemustert zu beleuchten, um so z. B. auf das Objekt aufgebrachte Kennzeichnungsmerkmale zu erkennen.

Vorzugsweise weist der Lichtsender ausschließlich eine Nanostruktur-basierte Leuchtdiode als Lichtquelle auf. Somit kann auf das aufwändige Zusammenführen der Sendelichtstrahlen unterschiedlicher Lichtquellen verzichtet werden, wodurch Herstellungskosten, Gewicht und Bauraum gespart werden.

Eine Steuereinrichtung des optischen Sensors kann dazu ausgebildet sein, zur Erkennung eines Objekts das Aussenden wenigstens eines Pilotlichtpulses auszulösen, eine Auswertung der von dem Lichtempfänger in Reaktion auf den Pilotlichtpuls empfangenen Empfangslichtstrahlen auszulösen und beruhend auf der Auswertung für wenigstens einen nachfolgenden Objekterkennungslichtpuls eine Abstrahlungseigenschaft der Nanostruktur-basierten Leuchtdiode einzustellen. Durch die Einstellung der Abstrahlungseigenschaft der Nanostruktur-basierten Leuchtdiode, zum Beispiel in Form einer Anpassung des Emissionsspektrums durch geeignete Auswahl entsprechender Nanostrukturen, kann die eigentliche Objekterkennung bei der für diese Art von Objekt optimaler Beleuchtung erfolgen. Somit ist es möglich, die Pulsenergie der Objekterkennungslichtpulse gegenüber dem Pilotlichtpuls zu reduzieren, um so die Verlustleistung gering zu halten.

Eine Steuereinrichtung des optischen Sensors kann ferner dazu ausgebildet sein, durch entsprechende Ansteuerung der Nanostruktur-basierten Leuchtdiode zeitlich nacheinander Sendelicht unterschiedlicher spektraler Emissionscharakteristik auszusenden und anhand der von dem Lichtempfänger empfangenen Empfangslichtstrahlen jeweils eine der aktuellen spektralen Emissionscharakteristik zugeordnete Kenngröße, insbesondere eine Schaltschwelle, zu bestimmen. Bei einer solchen Ausgestaltung wird der optische Sensor gewissermaßen als Spektrometer betrieben, um so z. B. eine wellenlängenabhängige Schaltschwellenbestimmung durchzuführen.

Eine weitere Ausgestaltung der Erfindung sieht vor, dass der Lichtsender eine Sendeoptik zur Projektion eines durch die Nanostruktur-basierte Leuchtdiode definierten Leuchtmusters auf ein zu erkennendes Objekt umfasst. Dies ermöglicht unter anderem eine zuverlässige Erkennung von Kennzeichnungsmerkmalen wie Druckmarken, welche auf ein zu erkennendes Objekt aufgebracht sind. Ein maximales Empfangssignal entsteht hierbei genau dann, wenn das Kennzeichnungsmerkmal und das projizierte Leuchtmuster übereinanderliegen.

Hierbei kann eine Steuereinrichtung des optischen Sensors dazu ausgebildet sein, durch entsprechende Ansteuerung der Nanostruktur-basierten Leuchtdiode zeitlich nacheinander unterschiedliche Flächenbereiche des durch die Nanostruktur-basierte Leuchtdiode definierten Leuchtmusters auf das Objekt zu projizieren. Beispielsweise könnte das Leuchtmuster aus zwei Sektoren zusammengesetzt sein, wobei im Falle einer sequenziellen Ansteuerung der Sektoren ein Differenzsignal erzeugt werden kann, welches ein laterales Abstandssignal zwischen dem projizierten Leuchtmuster und dem zu erkennenden Kennzeichnungsmerkmal angibt.

Bevorzugt umfasst die Nanostruktur-basierte Leuchtdiode eine Vielzahl von nebeneinander befindlichen, sich von der Oberfläche des Chips weg erstreckenden Nanodrähten oder Nanotürmen, die wie beschrieben im Prinzip einzelne Leuchtdioden darstellen und jeweils einen Durchmesser von z.B. weniger als 100 nm aufweisen und welche in einem gegenseitigen Abstand von wenigen µm auf einer Chipfläche positioniert sind. Ihre Länge kann z.B. einige 100 nm betragen. Derartige Nanostrukturen, welche auch als "nanowires" bezeichnet werden, sind z. B. durch lithographische Ätzverfahren aus einer entsprechenden Schichtstruktur oder durch epitaktisches Wachstum herstellbar. Die feine Rasterung ermöglicht das Bereitstellen einer praktisch vollständig homogenen Leuchtfläche.

Weiterbildungen der Erfindung sind auch in den abhängigen Ansprüchen, der Beschreibung sowie der beigefügten Zeichnung angegeben.

Die Erfindung wird nachfolgend beispielhaft anhand der Zeichnung beschrieben.
- Fig. 1: ist eine Prinzipdarstellung einer Ausgestaltung eines erfindungsgemäßen optischen Sensors.
- Fig. 2: zeigt schematisch die Leuchtfläche einer in einem erfindungsgemäßen optischen Sensor zu verwendenden Nanostruktur-basierten Leuchtdiode, welche ein regelmäßiges Muster von unterschiedlich abstrahlenden Zonen aufweist.
- Fig. 3: zeigt die in Fig. 2 dargestellte Leuchtfläche mit einem statistischen Muster von unterschiedlich abstrahlenden Zonen.
- Fig. 4: zeigt die in Fig. 2 dargestellte Leuchtfläche mit einem vorgegebenen makroskopischen Muster von unterschiedlich abstrahlenden Zonen.

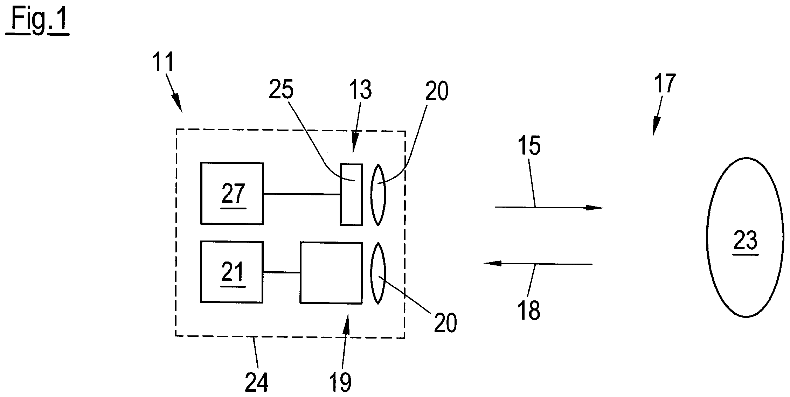

Der in Fig. 1 lediglich schematisch dargestellte optische Sensor 11, hier in der Ausgestaltung als optischer Taster, umfasst einen Lichtsender 13, welcher dazu ausgebildet ist, Sendelichtstrahlen 15 in einen Beleuchtungsbereich 17 auszusenden. Ein in dem Beleuchtungsbereich 17 vorhandenes Objekt 23 reflektiert oder remittiert die Sendelichtstrahlen 15, welche nachfolgend als Empfangslichtstrahlen 18 auf einen Lichtempfänger 19 des optischen Sensors 11 gelangen. Bei dem Lichtempfänger 19 kann es sich um eine Fotodiode oder um einen ortsauflösenden Detektor wie eine Diodenzeile oder ein CCD-Array handeln. Dem Lichtsender 13 und dem Lichtempfänger 19 sind jeweilige Strahlformungsoptiken 20 zugeordnet, wobei dies jedoch nicht für jede Sensoranwendung zwingend ist.

Eine elektronische Auswerteeinheit 21 steht mit dem Lichtempfänger 19 in Verbindung und ist in der Lage, anhand der von dem Lichtempfänger 19 empfangenen Empfangslichtstrahlen 18 das Objekt 23 zu erfassen und/oder eine Eigenschaft des Objekts 23 wie dessen Farbe zu ermitteln. Der Lichtsender 13 und der Lichtempfänger 19 sind können wie in Fig. 1 dargestellt in ein gemeinsames Sensorgehäuse 24 integriert sein. Grundsätzlich können der Lichtsender 13 und der Lichtempfänger 19 jedoch auch in getrennten Komponenten untergebracht sein, wenn beispielsweise eine Ein-Weg-Lichtschranke bereitgestellt werden soll.

Der Lichtsender 13 umfasst eine Lichtquelle in Form einer Nanostruktur-basierten Leuchtdiode 25. Eine elektronische Steuereinrichtung 27 ist mit der Nanostruktur-basierten Leuchtdiode 25 verbunden und dient dazu, durch Ansteuerung einer entsprechenden, nicht dargestellten Elektrodenanordnung der Nanostruktur-basierten Leuchtdiode 25 während des Betriebs des optischen Sensors 11 die Sendelichtstrahlen 15 räumlich und/oder spektral zu modulieren.

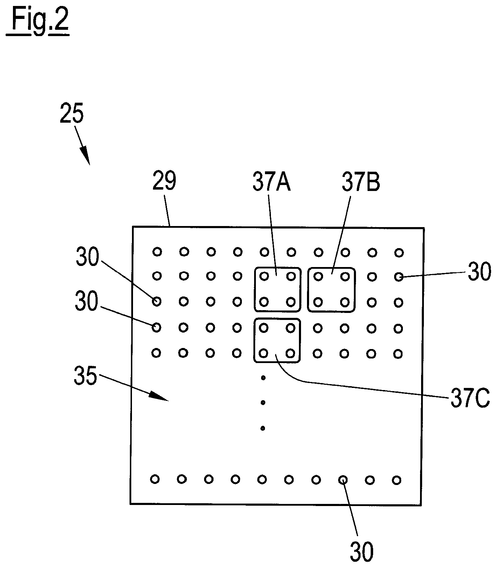

Wie in den Fig. 2 bis 4 erkennbar ist, umfasst die Nanostruktur-basierte Leuchtdiode 25 eine Chipfläche 29, auf welcher eine regelmäßige Anordnung von nebeneinander befindlichen Nanostrukturen 30, beispielsweise Nanodrähten oder Nanotürmen, aufgebracht ist. Die Nanostrukturen 30 sind in Fig. 2 bis 4 lediglich schematisch dargestellt und entsprechen hinsichtlich des Verhältnisses ihrer Abmessungen und ihres gegenseitigen Abstands zu der Größe der Chipfläche 29 nicht den tatsächlichen Gegebenheiten. Speziell können die Nanostrukturen 30 als längliche, sich von der Oberfläche des Chips weg erstreckende Nanodrähte mit einem Durchmesser von weniger als 100 nm bei einer Länge von einigen 100 nm ausgebildet und in einem gegenseitigen Abstand von z. B. 1 µm auf der Chipfläche 29 positioniert sein. Die Elektrodenanordnung der Nanostruktur-basierten Leuchtdiode 25 ist derart ausgebildet, dass es der Steuereinrichtung 27 ermöglicht ist, verschiedene Gruppen von Nanostrukturen 30 individuell anzusteuern.

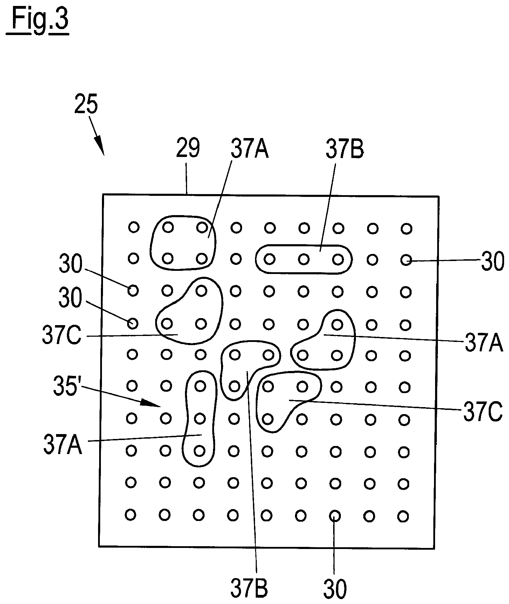

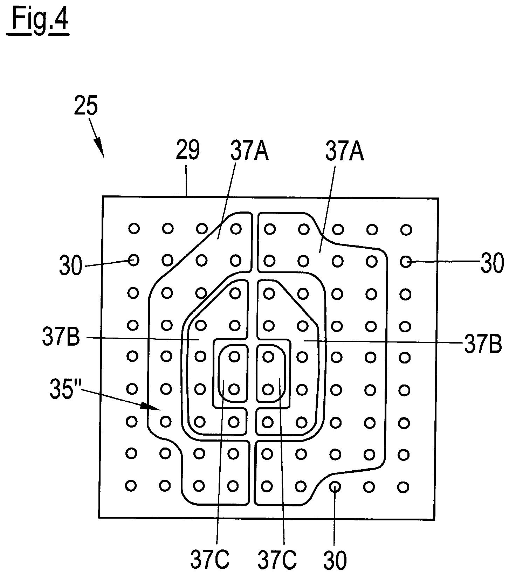

Durch die Anordnung von nebeneinander befindlichen Nanostrukturen 30 ist eine Leuchtfläche 35, 35', 35" definiert, welche mehrere separate Zonen 37A, 37B, 37C aufweist, in welchen sich die spektralen Emissionscharakteristiken der Nanostrukturen 30 voneinander unterscheiden. Beispielhaft sind in den Fig. 2 bis 4 jeweils drei unterschiedliche Zonen 37A, 37B, 37C mit jeweils verschiedenen Wellenlängen maximaler Abstrahlung gezeigt. Bei der in Fig. 2 dargestellten Leuchtfläche 35 bilden die Zonen 37A, 37B, 37C ein regelmäßiges mikroskopisches Muster. Das Muster erstreckt sich ungeachtet der beispielhaften Darstellung lediglich dreier Zonen 37A, 37B, 37C über die gesamte Leuchtfläche 35. Ferner sind zur Erläuterung die in der Realität mikroskopisch kleinen Zonen 37A, 37B, 37C vergrößert dargestellt. Die in Fig. 3 dargestellte Leuchtfläche 35' weist ein ähnliches mikroskopisches Muster aus Zonen 37A, 37B, 37C wie die in Fig. 2 gezeigte Leuchtfläche 35 auf, wobei hier die Verteilung der Zonen 37A, 37B, 37C jedoch nicht regelmäßig, sondern statistisch ist. Demgegenüber zeigt Fig. 4 eine Leuchtfläche 35" mit makroskopisch großen Zonen 37A, 37B, 37C. Die makroskopisch großen Zonen 37A, 37B, 37C bilden ein vorgegebenes Muster - hier in Form dreier konzentrischer, in je zwei Hälften geteilter Ringe. Das durch die makroskopisch großen Zonen 37A, 37B, 37C zu erzeugende Leuchtmuster kann auf ein Objekt 23 (Fig. 1) projiziert und z. B. zur selektiven Erkennung eines entsprechend gemusterten Kennzeichnungsmerkmals auf dem Objekt 23 genutzt werden.

Aufgrund der räumlichen und/oder spektralen Modulierbarkeit der Nanostruktur-basierten Leuchtdiode 25 ergeben sich vielfältige Möglichkeiten zur spezifischen Nutzung des optischen Sensors 11. Beispielsweise kann zum Erkennen eines Objekts 23 zunächst ein Pilotlichtpuls ausgesendet und das von dem Objekt 23 in Reaktion auf den Pilotlichtpuls reflektierte oder remittierte Empfangslicht ausgewertet werden. Anschließend kann beruhend auf der Auswertung für einen oder mehrere nachfolgende Objekterkennungslichtpulse das Emissionsspektrum der Nanostruktur-basierten Leuchtdiode 25 an die Farbe des Objekts 23 angepasst werden. Dies ermöglicht eine Verringerung der Sendeleistung für die Objekterkennungslichtpulse und so eine Minimierung der Verlustleistung.

Ebenso können durch entsprechende Ansteuerung der Nanostruktur-basierten Leuchtdiode 25 zeitlich nacheinander Sendelichtstrahlen 15 unterschiedlicher spektraler Emissionscharakteristiken ausgesendet werden, wobei anhand der von dem Lichtempfänger 19 empfangenen Empfangslichtstrahlen 18 jeweils eine der aktuellen spektralen Emissionscharakteristik zugeordnete Schaltschwelle des optischen Sensors 11 bestimmt wird.

Weiterhin können bei einer Leuchtfläche 35" mit makroskopischen Zonen 37A, 37B, 37C wie in Fig. 4 dargestellt zeitlich nacheinander unterschiedliche Bereiche des durch die nanostrukturbasierte Leuchtdiode 25 definierten Leuchtmusters auf das Objekt 23 projiziert werden.

Um die vorstehend angegebenen spezifischen Betriebsmodi zu implementieren, kann ein erfindungsgemäßer optischer Sensor 11 eine übergeordnete, mit der Auswerteeinheit 21 und der Steuereinrichtung 27 in Verbindung stehende Steuereinheit umfassen, welche in Fig. 1 jedoch nicht dargestellt ist.

Allgemein kann ein erfindungsgemäßer optischer Sensor 11 als optischer Taster, beispielsweise als Wechsellichttaster (WT), Lumineszenztaster (LT), Triangulationstaster - vorzugsweise mit Hintergrundausblendung (HGA) - oder als Kontrasttaster (KT) ausgebildet sein. Alternativ könnte ein erfindungsgemäßer optischer Sensor 11 auch als Lichtschranke, Lichtgitter oder als Farbsensor (CS) ausgebildet sein.

Die Verwendung einer Nanostruktur-basierten Leuchtdiode 25 als Lichtquelle für einen optischen Sensor ermöglicht nicht nur eine aufgrund des anpassbaren Emissionsspektrums und der verbesserten Strahlformung besonders zuverlässige Objekterkennung, sondern auch eine beträchtliche Einsparung von Herstellungskosten, Gewicht und Bauraum.

### Bezugszeichenliste

- 11: optischer Sensor
- 13: Lichtsender
- 15: Sendelichtstrahlen
- 17: Beleuchtungsbereich
- 18: Empfangslichtstrahlen
- 19: Lichtempfänger
- 20: Strahlformungsoptik
- 21: Auswerteeinheit
- 23: Objekt
- 24: Sensorgehäuse
- 25: Nanostruktur-basierte Leuchtdiode
- 27: Steuereinrichtung
- 29: Chipfläche
- 30: Nanostruktur
- 35, 35', 35": Leuchtfläche
- 37A, 37B, 37C: Zone

## Patentansprüche

1. Optischer Sensor (11) zur Erkennung von Objekten (23) oder Objekteigenschaften umfassend einen Lichtsender (13) zum Aussenden von Sendelichtstrahlen (15) in einen Beleuchtungsbereich (17), einen Lichtempfänger (19) zum Empfangen von Empfangslichtstrahlen (18) und eine Auswerteeinheit (21), die dazu ausgebildet ist, anhand der von dem Lichtempfänger (19) empfangenen Empfangslichtstrahlen (18) ein in dem Beleuchtungsbereich (17) befindliches oder in diesen hineinragendes Objekt (23) zu erfassen und/oder eine Eigenschaft eines solchen Objekts (23) zu ermitteln wobei der optische Sensor (11) als optischer Taster, als Ein-Weg-Lichtschranke, als Reflexionslichtschranke oder als Farbsensor ausgebildet ist, **dadurch gekennzeichnet, dass** der Lichtsender (13) eine Nanostruktur-basierte Leuchtdiode (25) umfasst, wobei jede Nanostruktur (30) der Nanostruktur-basierten Leuchtdiode (25) eine Einzel-Leuchtdiode bildet, die hinsichtlich ihrer Abstrahlungseigenschaften individuell ausgelegt sein kann.

2. Optischer Sensor nach Anspruch 1,
**dadurch gekennzeichnet, dass** dem Lichtsender (13) eine Steuereinrichtung (27) zugeordnet ist, welche dazu ausgebildet ist, die Sendelichtstrahlen (15) durch Ansteuerung der Nanostruktur-basierten Leuchtdiode (25) während des Betriebs des optischen Sensors (11) räumlich und/oder spektral zu modulieren.

3. Optischer Sensor nach Anspruch 2,
**dadurch g**e**kennzeichnet**, dass die Steuereinrichtung (27) dazu ausgebildet ist, zum räumlichen und/oder spektralen Modulieren der Sendelichtstrahlen (15) verschiedene Gruppen von Nanostrukturen (30) der Nanostruktur-basierten Leuchtdiode (25) individuell anzusteuern.

4. Optischer Sensor nach einem der vorstehenden Ansprüche,
**dadurch gekennzeichnet, dass** die Nanostruktur-basierte Leuchtdiode (25) eine durch eine Anordnung von nebeneinander befindlichen Nanostrukturen (30) definierte Leuchtfläche (35, 35', 35") aufweist, wobei sich die Abstrahlungseigenschaften, insbesondere die spektralen Emissionscharakteristiken, der Nanostrukturen (30) in wenigstens zwei separaten Zonen (37A, 37B, 37C) der Leuchtfläche (35, 35', 35") voneinander unterscheiden.

5. Optischer Sensor nach Anspruch 4,
**dadurch gekennzeichnet, dass** Zonen (37A, 37B, 37C) der Leuchtfläche (35, 35'), die sich hinsichtlich der Abstrahlungseigenschaften der Nanostrukturen (30) unterscheiden, ein regelmäßiges oder statistisches, insbesondere mikroskopisches, Muster bilden, welches sich vorzugsweise über die gesamte Leuchtfläche (35, 35') der Nanostruktur-basierten Leuchtdiode (25) erstreckt.

6. Optischer Sensor nach Anspruch 4 oder 5,
**dadurch gekennzeichnet, dass** Zonen (37A, 37B, 37C) der Leuchtfläche (35"), die sich hinsichtlich der Abstrahlungseigenschaften der Nanostrukturen (30) unterscheiden, ein vorgegebenes makroskopisches Muster bilden.

7. Optischer Sensor nach einem der vorstehenden Ansprüche,
**dadurch gekennzeichnet, dass** der Lichtsender (13) ausschließlich eine Nanostruktur-basierte Leuchtdiode (25) als Lichtquelle aufweist.

8. Optischer Sensor nach einem der vorstehenden Ansprüche,
**dadurch gekennzeichnet, dass** eine Steuereinheit des optischen Sensors (11) dazu ausgebildet ist, zur Erkennung eines Objekts (23) das Aussenden wenigstens eines Pilotlichtpulses auszulösen, eine Auswertung der von dem Lichtempfänger (19) in Reaktion auf den Pilotlichtpuls empfangenen Empfangslichtstrahlen (18) auszulösen und beruhend auf der Auswertung für wenigstens einen nachfolgenden Objekterkennungslichtpuls eine Abstrahlungseigenschaft der Nanostruktur-basierten Leuchtdiode (25) einzustellen.

9. Optischer Sensor nach einem der vorstehenden Ansprüche,
**dadurch gekennzeichnet, dass** eine Steuereinheit des optischen Sensors (11) dazu ausgebildet ist, durch entsprechende Ansteuerung der Nanostruktur-basierten Leuchtdiode (25) zeitlich nacheinander Sendelichtstrahlen (15) unterschiedlicher spektraler Emissionscharakteristiken auszusenden und anhand der von dem Lichtempfänger (19) empfangenen Empfangslichtstrahlen (18) jeweils eine der aktuellen spektralen Emissionscharakteristik zugeordnete Kenngröße, insbesondere eine Schaltschwelle, zu bestimmen.

10. Optischer Sensor nach einem der vorstehenden Ansprüche,
**dadurch gekennzeichnet, dass** der Lichtsender (13) eine Sendeoptik (20) zur Projektion eines durch die Nanostruktur-basierte Leuchtdiode (25) definierten Leuchtmusters auf ein zu erkennendes Objekt (23) umfasst.

11. Optischer Sensor nach Anspruch 10,
**dadurch gekennzeichnet, dass** eine Steuereinheit des optischen Sensors (11) dazu ausgebildet ist, durch entsprechende Ansteuerung der Nanostruktur-basierten Leuchtdiode (25) zeitlich nacheinander unterschiedliche Flächenbereiche des durch die Nanostruktur-basierte Leuchtdiode (25) definierten Leuchtmusters auf das Objekt (23) zu projizieren.

12. Optischer Sensor nach einem der vorstehenden Ansprüche,
**dadurch gekennzeichnet, dass** der optische Sensor (11) als Wechsellicht-Taster, Triangulationstaster, Lumineszenztaster oder Kontrasttaster ausgebildet ist.

13. Optischer Sensor nach einem der vorstehenden Ansprüche,
**dadurch gekennzeichnet, dass** die Nanostruktur-basierte Leuchtdiode (25) eine Vielzahl von nebeneinander befindlichen Nanodrähten (30) oder Nanotürmen umfasst, welche jeweils einen Durchmesser von höchstens 1 µm aufweisen und welche in einem gegenseitigen Abstand von höchstens 5 µm auf einer Chipfläche (29) positioniert sind.

## Claims

1. An optoelectronic sensor (11) for recognizing objects (23) or object properties, said optoelectronic sensor (11) comprising a light transmitter (13) for transmitting transmission light beams (15) into an illuminated zone (17); a light receiver (19) for receiving reception light beams (18); and an evaluation unit (21) which is configured to detect an object (23) located in or projecting into the illuminated zone (17) and/or to determine a property of such an object (23) using the reception light beams (18) received by the light receiver (19),
wherein the optical sensor (11) is configured as an optical sensing element, as a one-way light barrier, as a reflection light barrier or as a color sensor, **characterized in that**
the light transmitter (13) comprises a nanostructure-based light emitting diode (25), with each nanostructure (30) of the nanostructure-based light emitting diode (25) forming a single light emitting diode which can be individually designed with respect to its radiation properties.

2. An optical sensor in accordance with claim 1,
**characterized in that**
a control device (27) is associated with the light transmitter (13) and is configured to spatially and/or spectrally modulate the transmission light beams (15) during the operation of the optical sensor (11) by controlling the nanostructure-based light emitting diode (25).

3. An optical sensor in accordance with claim 2,
**characterized in that**
the control device (27) is configured to individually control different groups of nanostructures (30) of the nanostructure-based light emitting diode (25) in order to spatially and/or spectrally modulate the transmission light beams (15).

4. An optical sensor in accordance with any one of the preceding claims,
**characterized in that**
the nanostructure-based light emitting diode (25) has a light emitting surface (35, 35', 35") defined by an arrangement of nanostructures (30) located next to one another, with the radiation properties, in particular the spectral emission characteristics, of the nanostructures (30) differing from one another in at least two separate zones (37A, 37B, 37C) of the light emitting surface (35, 35', 35").

5. An optical sensor in accordance with claim 4,
**characterized in that**
zones (37A, 37B, 37C) of the light emitting surface (35, 35') which differ with respect to the radiation properties of the nanostructures (30) form a regular or statistical, in particular microscopic, pattern which preferably extends over the total light emitting surface (35, 35') of the nanostructure-based light emitting diode (25).

6. An optical sensor in accordance with claim 4 or claim 5,
**characterized in that**
zones (37A, 37B, 37C) of the light emitting surface (35"), which differ with respect to the radiation properties of the nanostructures (30), form a predefined macroscopic pattern.

7. An optical sensor in accordance with any one of the preceding claims,
**characterized in that**
the light transmitter (13) only has a nanostructure-based light emitting diode (25) as a light source.

8. An optical sensor in accordance with any one of the preceding claims,
**characterized in that**
a control unit of the optical sensor (11) is configured, for the recognition of an object (23), to trigger the transmission of at least one pilot light pulse, to trigger an evaluation of the reception light beams (18) received by the light receiver (19) in response to the pilot light pulse and, on the basis of the evaluation, to set a radiation property of the nanostructure-based light emitting diode (25) for at least one subsequent object recognition light pulse.

9. An optical sensor in accordance with any one of the preceding claims,
**characterized in that**
a control unit of the optical sensor (11) is configured to transmit transmission light beams (15) of different spectral emission characteristics after one another in time by a corresponding control of the nanostructure-based light emitting diode (25) and to determine a respective characteristic value, in particular a switching threshold, associated with the current spectral emission characteristic using the reception light beams (18) received by the light receiver (19).

10. An optical sensor in accordance with any one of the preceding claims,
**characterized in that**
the light transmitter (13) comprises a transmission optics (20) for projecting a lighting pattern defined by the nanostructure-based light emitting diode (25) onto an object (23) to be recognized.

11. An optical sensor in accordance with claim 10,
**characterized in that**
a control unit of the optical sensor (11) is configured to project different areal regions of the lighting pattern defined by the nanostructure-based light emitting diode (25) onto the object (23) after one another in time by a corresponding control of the nanostructure-based light emitting diode (25).

12. An optical sensor in accordance with any one of the preceding claims,
**characterized in that**
the optical sensor (11) is configured as a changing light sensor, a triangulation sensor, a luminescence sensor or a contrast sensor.

13. An optical sensor in accordance with any one of the preceding claims,
**characterized in that**
the nanostructure-based light emitting diode (25) comprises a plurality of nanowires (30) or nanotowers which are disposed next to one another, which each have a diameter of at most 1 µm and which are positioned at a mutual spacing of at most 5 µm on a chip surface (29).

## Revendications

1. Capteur optique (11) pour détecter des objets (23) ou des propriétés d'objets, comprenant un émetteur de lumière (13) pour émettre des rayons lumineux d'émission (15) dans une zone d'éclairage (17), un récepteur de lumière (19) pour recevoir des rayons lumineux de réception (18) et une unité d'évaluation (21) qui est réalisée pour déterminer, à partir des rayons lumineux de réception (18) reçus par le récepteur de lumière (19), un objet (23) situé dans ou se projetant dans la zone d'éclairage (17) et/ou pour déterminer une propriété d'un tel objet (23), le capteur optique (11) étant réalisé sous forme détecteur optique, de barrière lumineuse unidirectionnelle, de barrière lumineuse à réflexion ou de capteur de couleur,
**caractérisé en ce que**
l'émetteur de lumière (13) comprend une diode électroluminescente (25) à base de nanostructures, chaque nanostructure (30) de la diode électroluminescente (25) à base de nanostructures formant une diode électroluminescente individuelle qui peut être conçue individuellement quant à ses propriétés de rayonnement.

2. Capteur optique selon la revendication 1,
**caractérisé en ce que**
un dispositif de commande (27) est associé à l'émetteur de lumière (13) et est réalisé pour moduler spatialement et/ou spectralement les faisceaux lumineux d'émission (15) par pilotage de la diode électroluminescente (25) à base de nanostructures pendant le fonctionnement du capteur optique (11).

3. Capteur optique selon la revendication 2,
**caractérisé en ce que**
le dispositif de commande (27) est réalisé pour piloter individuellement différents groupes de nanostructures (30) de la diode électroluminescente (25) à base de nanostructures, afin de moduler spatialement et/ou spectralement les faisceaux lumineux d'émission (15).

4. Capteur optique selon l'une des revendications précédentes,
**caractérisé en ce que**
la diode électroluminescente (25) à base de nanostructures présente une surface lumineuse (35, 35', 35") définie par un ensemble de nanostructures (30) situées les unes à côté des autres, les propriétés de rayonnement, en particulier les propriétés d'émission spectrales, des nanostructures (30) se distinguant les unes des autres dans au moins deux zones séparées (37A, 37B, 37C) de la surface lumineuse (35, 35', 35").

5. Capteur optique selon la revendication 4,
**caractérisé en ce que**
des zones (37A, 37B, 37C) de la surface lumineuse (35, 35') qui se distinguent quant aux propriétés de rayonnement des nanostructures (30) forment un motif régulier ou statistique, en particulier microscopique, qui s'étend de préférence sur toute la surface lumineuse (35, 35') de la diode électroluminescente (25) à base de nanostructures.

6. Capteur optique selon la revendication 4 ou 5,
**caractérisé en ce que**
des zones (37A, 37B, 37C) de la surface lumineuse (35") qui se distinguent quant aux propriétés de rayonnement des nanostructures (30) forment un motif macroscopique prédéterminé.

7. Capteur optique selon l'une des revendications précédentes,
**caractérisé en ce que**
l'émetteur de lumière (13) comprend comme source de lumière exclusivement une diode électroluminescente (25) à base de nanostructures.

8. Capteur optique selon l'une des revendications précédentes,
**caractérisé en ce que**
afin de détecteur un objet (23), une unité de commande du capteur optique (11) est réalisée pour déclencher l'émission d'au moins une impulsion de lumière pilote, pour déclencher une évaluation des faisceaux lumineux de réception (18) reçus par le récepteur de lumière (19) en réponse à l'impulsion de lumière pilote, et pour régler, sur la base de l'évaluation, une propriété de rayonnement de la diode électroluminescente (25) à base de nanostructures pour au moins une impulsion de lumière de détection d'objet suivante.

9. Capteur optique selon l'une des revendications précédentes,
**caractérisé en ce que**
une unité de commande du capteur optique (11) est réalisée pour émettre successivement dans le temps des faisceaux lumineux d'émission (15) de différentes caractéristiques d'émission spectrales par pilotage correspondant de la diode électroluminescente (25) à base de nanostructures, et pour déterminer, sur la base des faisceaux lumineux de réception (18) reçus par le récepteur de lumière (19), une grandeur caractéristique respective, en particulier un seuil de commutation, associé(e) à la caractéristique d'émission spectrale courante.

10. Capteur optique selon l'une des revendications précédentes,
**caractérisé en ce que**
l'émetteur de lumière (13) comprend une optique d'émission (20) pour projeter un motif lumineux, défini par la diode électroluminescente (25) à base de nanostructures, sur un objet (23) à détecter.

11. Capteur optique selon la revendication 10,
**caractérisé en ce que**
une unité de commande du capteur optique (11) est réalisée pour projeter successivement dans le temps différentes zones de surface du motif lumineux, défini par la diode électroluminescente (25) à base de nanostructures, sur l'objet (23) par pilotage correspondant de la diode électroluminescente (25) à base de nanostructures.

12. Capteur optique selon l'une des revendications précédentes,
**caractérisé en ce que**
le capteur optique (11) est réalisé sous forme de détecteur de lumière alternante, de détecteur à triangulation, de détecteur de luminescence ou de détecteur de contraste.

13. Capteur optique selon l'une des revendications précédentes,
**caractérisé en ce que**
la diode électroluminescente (25) à base de nanostructures comprend une multitude de nanofils (30) ou de nanotours situés les uns à côté des autres, qui présentent chacun un diamètre d'au plus 1 µm et qui sont positionnés à une distance mutuelle d'au plus 5 µm sur une surface de puce (29).
